# EUROPÄISCHE PATENTANMELDUNG

(11) **EP 3 483 044 A1**
(43) Veröffentlichungstag der Anmeldung: **15.05.2019**
(21) Anmeldenummer: 18204965.0
(22) Anmeldetag: 07.11.2018
(51) Int. Cl.: B62D 25/18, B62D 25/16

(54) **KOTFLÜGEL MIT SPRITZLAPPEN ZUR MONTAGE AN FAHRZEUGEN, BEVORZUGT LASTKRAFTWAGEN**

(30) Priorität: 08.11.2017 DE 202017106775 U
(71) Anmelder: Sauermann, Franz, 86558 Freinhausen (DE)
(72) Erfinder: Sauermann, Franz, 86558 Freinhausen (DE)
(74) Vertreter: TBK

(57) **Zusammenfassung**

Offenbart wird ein Kotflügel mit Spritzlappen (2) zur Montage an Fahrzeugen, bevorzugt Lastkraftwagen, der in seinem unteren Bereich mit einem Spritzlappen (2) versehen ist, der mittels eines Montagemittels (4) mit dem Kotflügel (1) verbunden wird, wobei der Spritzlappen (2) in seinem oberen Bereich mindestens zwei beabstandete Abschnitte aufweist, die einen Schlitz ausbilden, der auf die Dicke des unteren Bereichs des Kotflügels (1) abgestimmt ist, um auf diesen aufsteckbar zu sein, und des Weiteren eine Verbindung von Kotflügel (1) und Spritzlappen (2) mittels Montagemittel (4) erfolgt, die den Spritzlappen (2) und den Kotflügel (1) durchdringen und von einer Montagemittelaufnahme bevorzugt am Spritzlappen (2) aufgenommen werden.

## Beschreibung

Größere Fahrzeuge sind üblicherweise mit Kotflügeln ausgestattet, die an ihrem unteren Ende einen Spritzlappen aufweisen, um das Abspritzen von Wasser von den Rädern auf den nachfolgenden Verkehr zu vermeiden. Üblicherweise sind derartige Spritzlappen auf einfache Weise mittels Schrauben mit dem Kotflügel verbunden. Hierzu sind am Spritzlappen sowie am Kotflügel korrespondierende Löcher vorgesehen, durch die Gewindeschrauben gesteckt werden, die dann auf der anderen Seite mittels Muttern gesichert werden. Um seine Funktion auch bei höheren Fahrgeschwindigkeiten zu erfüllen, muss der Spritzlappen eine gewisse Steifigkeit aufweisen, um zu vermeiden, dass dieser über das zulässige Maß durch den Fahrtwind nach hinten abgelenkt wird und somit nicht mehr weit genug nach unten reicht, um abspritzendes Wasser abzufangen.

Aufgabe der vorliegenden Erfindung ist es, einen Kotflügel mit Spritzlappen zu schaffen, bei dem der Spritzlappen einfach und schnell zu montieren ist und bei dem ein Auslenken oder Auswehen über das zulässige Maß sicher verhindert wird. Diese Aufgabe wird durch die Merkmale des Anspruchs 1 gelöst.

Gemäß der Erfindung weist der Spritzlappen in seinem oberen Bereich, an dem er mit dem Kotflügel verbunden wird, zumindest zwei beabstandete Abschnitte auf, die einen Schlitz ausbilden mittels dem der Spritzlappen auf den unteren Bereich des Kotflügels aufsteckbar ist. Dabei ist grundsätzlich auch eine Konstruktion möglich, bei der der Schlitz durch zwei beabstandete Abschnitte des Kotflügels gebildet wird und der Spritzlappen mit seinem oberen Abschnitt in diesen Schlitz eingesteckt wird. Bei hinreichender Einstecktiefe ergibt sich auch bei dieser Konstruktion eine ausreichende Steifigkeit. Um dieses Aufstecken zu ermöglichen, muss der Schlitz eine Größe haben, die zumindest der Dicke des entsprechenden unteren Bereichs des Kotflügels, auf den der Spritzlappen aufgesteckt werden soll, entspricht. Der Schlitz kann jedoch auch größer ausgebildet sein, ist jedoch optimal so bemessen, dass der Spritzlappen auf den Kotflügel aufgesteckt werden kann und durch den Reibschluss zwischen dem unteren Bereich des Kotflügels und dem genannten Schlitz der Spritzlappen gehalten wird, sodass zum Anbringen der Montagemittel ein weiteres manuelles Halten des Spritzlappens nicht erforderlich ist. Zweckmäßig erstreckt sich der Schlitz über die Breite des Spritzlappens, wobei mit Breite die Erstreckung in Fahrzeugbreite gemeint ist. Der Schlitz kann als durchgehender Schlitz zwischen zwei beabstandeten Abschnitten ausgebildet sein oder auch als unterbrochener Schlitz, der mittels eines durchgehenden Abschnitts und mehreren laschenartigen Abschnitten ausgebildet ist, oder es können durch gegenüberliegende, unterbrochene, laschenartige Abschnitte auch mehrere Schlitze ausgebildet sein, die sich jedoch ebenfalls zweckmäßig über die Breite des Spritzlappens erstrecken.

Je größer die Erstreckung des Schlitzes ist, desto mehr Kontakt und damit Klemmfläche ergibt sich, um den Spritzlappen so auf den Kotflügel aufstecken zu können, dass dieser nicht weiter manuell gehalten werden muss. Des Weiteren erhöht sich dadurch die Stabilität des Spritzlappens, was im Weiteren detailliert erläutert wird. Es ist jedoch nicht zwingend erforderlich, den Schlitz über die gesamte Breite des Spritzlappens auszuführen und auch einzelne gegenüberliegende Laschen, die über die Breite des Spritzlappens verteilt sind, beispielsweise vier unterbrochene gegenüberliegende Laschen, können die Aufgabe erfüllen.

Eine besonders einfache Montage des Spritzlappens ergibt sich, wenn auf einer Seite des Spritzlappens, bevorzugt auf der Innenseite, die zum Fahrzeugrad hinweist, eine Montagemittelaufnahme ausgebildet ist. Beispielsweise können als Montagemittel Schrauben mit einem selbstschneidenden Gewinde eingesetzt werden und als Montagemittelaufnahme ein Kunststoffelement, in das die Schraube eindrehbar ist. Zweckmäßig ist dieses Kunststoffelement einstückig mit dem Spritzlappen in dem inneren beabstandeten Abschnitt, der den genannten Schlitz ausbildet, vorgesehen. An der gegenüberliegenden äußeren Seite ist in dem entsprechenden Abschnitt des Spritzlappens dann lediglich ein Loch ausgebildet, das mit einem in der aufgesteckten Montageposition am Kotflügel vorgesehenen Loch fluchtet, so dass der Spritzlappen lediglich aufgesteckt werden muss und dann die Schraube durch den Kotflügel hindurch in das rückseitig am Spritzlappen vorgesehene Kunststoffelement eingedreht wird. Bei einer solchen Halterung ist ein Hantieren mit Muttern und dergleichen nicht erforderlich. Gemäß einer bevorzugten Ausführungsform ist der außenliegende, den Schlitz ausbildende Abschnitt des Spritzlappens durchgehend über die Breite des Spritzlappens ausgebildet und der korrespondierende innenliegende Abschnitt unterbrochen durch mehrere Laschen, die das Kunststoffelement zur Aufnahme der Montagemittel tragen.

Bei der konkreten, noch detailliert dargestellten Ausführungsform werden als Montagemittel Schrauben mit selbstschneidendem Gewinde verwendet, die in Kunststoffelemente eingedreht werden, die eine Bohrung aufweisen, die einen geringeren Durchmesser hat als der Außendurchmesser des Gewindes. Das Kunststoffelement kann sich kegelförmig nach oben bzw. außen verjüngen, wobei die Spitze abgeflacht sein kann. Es sind aber auch andere Gestaltungen, wie zylinderförmige oder halbkugelförmige Gestaltungen, möglich. Zur Erhöhung der Stabilität können an dem Kunststoffelement Verstärkungsrippen vorgesehen sein. Diese erstrecken sich vom Kunststoffelement zweckmäßig radial nach außen und können unterschiedlich gestaltet sein. Wichtig ist, dass diese ebenfalls einstückig mit dem Spritzlappen ausgebildet sind, um so die Stabilität zu erhöhen.

Es können aber auch andere Montagemittel zum Einsatz kommen, beispielsweise können Steckelemente zum Einsatz kommen, die nach dem Durchstecken von außen durch den Kotflügel an dem inneren Abschnitt des Spritzlappens verrasten. Hierzu können übliche Rastmechanismen vorgesehen sein, die lösbar oder auch unlösbar gestaltet sein können, da üblicherweise ein Spritzlappen erst nach Verschleiß erneuert wird, und daher bei der Demontage auch beschädigt werden kann. Der auf den Spritzlappen wirkende Fahrtwind versucht das freie, also untere, Ende des Spritzlappens, das nicht fixiert ist, nach hinten auszuwehen. Die Biegung des Spritzlappens erfolgt dann um den oberen Bereich, der mit dem Kotflügel verbunden ist. Bei der beschriebenen Konstruktionen wird eben dieser Bereich durch das Vorsehen von zumindest zwei beabstandeten Abschnitten, die durch Montagemittel fest miteinander verbunden werden, erheblich ausgesteift. Es ergibt sich somit eine Konstruktion, die zum Einen einfach zu Montieren ist und zum Anderen auch bei überschaubarem Materialeinsatz eine ausgesprochen steife Konstruktion darstellt, die ein Auswehen oder Auslenken des Spritzlappens über das zulässige Maß wirksam verhindert.

Weiterhin detailliert beschrieben im konkreten Ausführungsbeispiel ist die Montagemittelaufnahme in dem radseitigen inneren Abschnitt des Spritzlappens, wobei das Montagemittel, in diesem Fall eine Schraube, einfach von außen eingebracht werden kann. Grundsätzlich ist jedoch auch eine umgedrehte Anordnung möglich, bei der die Montagemittelaufnahme an dem außenliegenden Abschnitt des Spritzlappens vorgesehen ist und das Montagemittel von innen, also von der Radseite aus, eingebracht wird. Insbesondere wenn das Montagemittel keine Schraube ist, sondern ein Einsteckstift, ist dies ohne Weiteres und ohne größere Nachteile möglich. Um die Festigkeit, insbesondere die Steifigkeit, des oberen Bereichs des Spritzlappens zu erhöhen, ist die beschriebene Konstruktion ausgesprochen vorteilhaft. Durch die Verbindung des den Schlitz ausbildenden Abschnitts des Spritzlappens mittels Montagemittel mit dem dazwischen befindlichen Teil des Kotflügels wird eine steife Konstruktion geschaffen. Grundsätzlich ist aber auch eine Konstruktion denkbar, bei der die erforderliche Festigkeit bzw. Steifigkeit bereits durch den Schlitz bzw. das Aufstecken des Spritzlappens auf das untere Ende des Kotflügels erzielt wird und die Montagemittel im Wesentlichen lediglich dazu dienen, den Spritzlappen in der gewünschten Position zu sichern und eventuell einen geringen Festigkeitsbeitrag zu leisten. In diesem Fall kann die Montagemittelaufnahme auch am Kotflügel selbst vorgesehen sein, sodass nur einer der Abschnitte des Spritzlappens vom Montagemittel durchdrungen wird, das dann am Kotflügel mittels Eintreten oder Einstecken gesichert wird. Ebenso, wenn die beabstandeten Abschnitte am Kotflügel ausgebildet und der Spritzlappen eingesteckt wird.

Um das Montagemittel einbringen zu können, müssen die Bohrungen am Spritzlappen und am Kotflügel fluchten. Um die Montage weiter zu vereinfachen, können am Kotflügel und/oder Spritzlappen Führungen bzw. Führungsflächen vorgesehen sein, die ein Aufstecken nur in einer definierten Position, nämlich der endgültigen Montageposition, ermöglichen. Hierzu können Vor- oder Rücksprünge an den Teilen vorgesehen sein. Es können auch Seitenflächen beispielsweise laschenartiger Vorsprünge oder beabstandete Abschnitte zur Führung verwendet werden, indem diese mit entsprechend angeordneten Seitenflächen des anderen Teils zusammenwirken. Auch die Endposition kann durch entsprechende Führungen begrenzt werden, sodass beim Aufstecken des Spritzlappens nicht weiter auf ein Fluchten der Bohrungen geachtet werden muss, sondern dieses Fluchten sich von alleine beim vervollständigten Aufstecken des Spritzlappens ergibt wodurch die Montage nochmals vereinfacht wird.

Die Erfindung wird näher anhand zweier bevorzugter Ausführungsbeispiele erläutert. Es zeigt:
- Fig. 1: den erfindungsgemäßen Kotflügel mit Spritzlappen von der Seite,
- Fig. 2: den erfindungsgemäßen Kotflügel mit Spritzlappen von hinten,
- Fig. 3: den erfindungsgemäßen Kotflügel mit Spritzlappen von innen,
- Fig. 4: den erfindungsgemäßen Kotflügel mit Spritzlappen in einem Teilschnitt,
- Fig. 5: einen Teil der Befestigung des Spritzlappens am Kotflügel bei einer zweiten, leicht abgewandelten Ausführungsform.

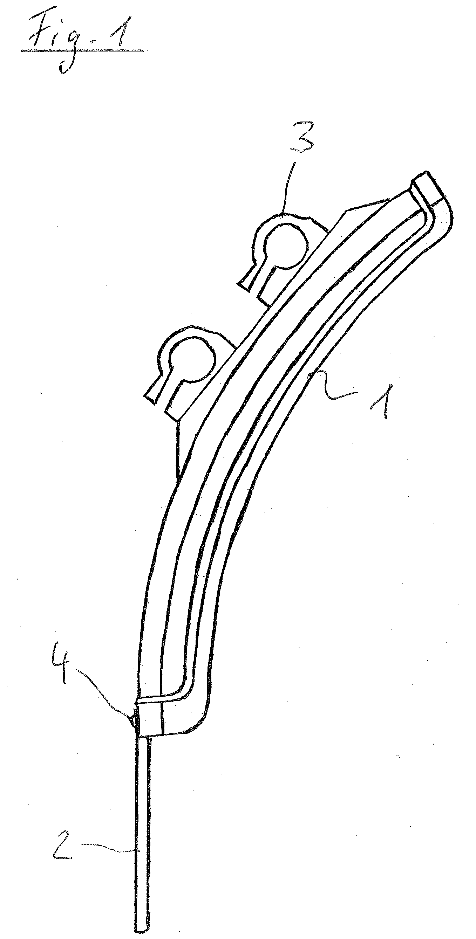

In Fig. 1 ist der Kotflügel 1 mit montierten Spritzlappen 2 von der Seite dargestellt. Der Kotflügel 1 wird über Befestigungsschellen 3 am Fahrzeug montiert. Um ein Abspritzen von Wasser oder anderen Flüssigkeiten vom Rad auf den dahinter fahrenden Verkehr zu vermeiden, ist am unteren Ende des Kotflügels 1 ein Spritzlappen 2 angebracht. Die Befestigung erfolgt über Schrauben 4, die von außen durch den Spritzlappen 2 hindurch mit dem Kotflügel 1 und einem rückwertigen Teil des Spritzlappens 2 verschraubt werden. Dies wird detailliert anhand der weiteren Figuren erläutert.

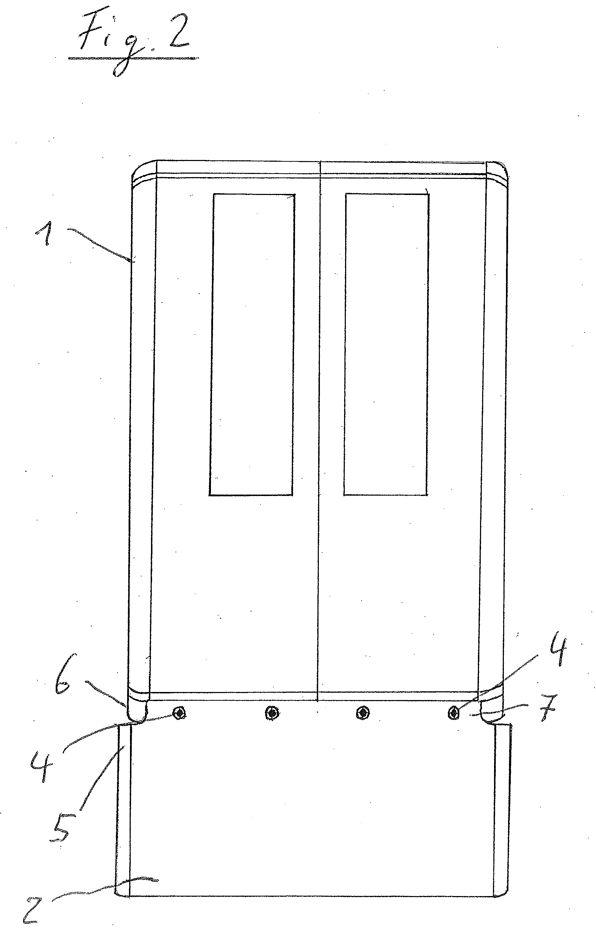

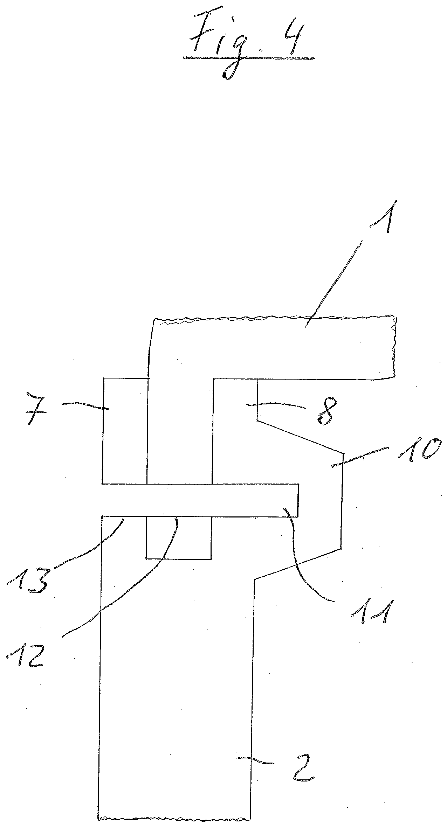

Fig. 2 zeigt den Kotflügel 1 mit Spritzlappen 2 von hinten. Gut zu sehen ist, dass der Spritzlappen einen unteren Bereich 5 und einen oberen Bereich 6 aufweist. Der obere Bereich 6 überlappt mit dem unteren Bereich des Kotflügels 1 und dient zur Befestigung des Spritzlappens 2 am Kotflügel 1. Hierzu sind beim konkreten Ausführungsbeispiel vier Schrauben 4 vorgesehen. Der obere Bereich 6 des Spritzlappens 2 weist zwei beabstandete Abschnitte 7, 8 auf, die den unteren Abschnitt 9 des Kotflügels 1 umgreifen und ein Aufstecken des Spritzlappens 2 auf den Kotflügel 1 ermöglichen, wie dies gut aus dem Schnitt in Fig. 4 zu sehen ist. In Fig. 4 ist der auf den Kotflügel aufgesteckte Spritzlappen 2 zu sehen, wobei die Schrauben 4 jedoch noch nicht eingedreht sind.

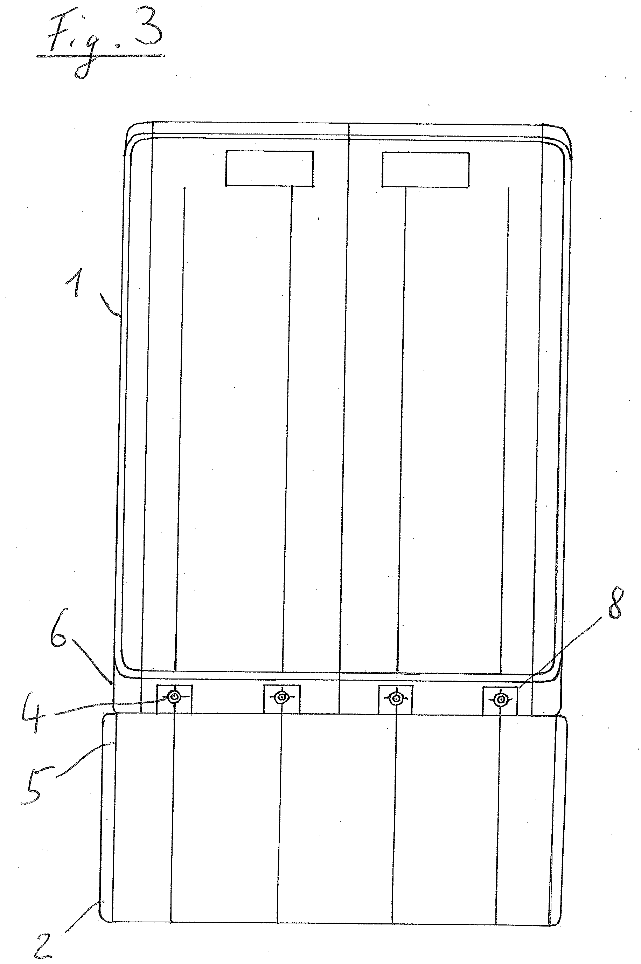

Wie aus Fig. 3 ersichtlich, ist der innere Abschnitt 8 des Spritzlappens im Gegensatz zum äußeren Abschnitt 7 nicht durchgehend ausgebildet, sondern wird durch vier laschenartige hervorstehende Bereiche an der Innenseite des Spritzlappens 2 ausgebildet. Diese laschenartigen Bereiche werden seitlich durch vorstehende Elemente am Kotflügel 1 geführt, sodass ein Aufstecken des Spritzlappens 2 auf den Kotflügel 1 nur in einer genau definierten Position, die der endgültigen Montageposition entspricht, möglich ist. Der Spritzlappen 2 muss daher bei der Montage lediglich geführt durch die genannten Wandlungen soweit wie möglich auf den Kotflügel 1 aufgesteckt werden und befindet sich dann in der endgültigen Montageposition, in der er durch die genannten Schrauben 4 gesichert wird. Eine einfache Montage wird dabei durch Kunststoffelemente 10 ermöglicht, die am inneren Abschnitt 8 des Spritzlappens 2 vorgesehen sind und in ihrem Inneren eine Bohrung 11 aufweisen, deren Durchmesser geringer ist als der Außendurchmesser der einzudrehenden Schraube 4. Diese Kunststoffelemente 10 sind beim konkreten Ausführungsbeispiel in Form abgeflachter Kegel ausgebildet, deren breite Basis am inneren Abschnitt 8 vorgesehen ist, so dass sich der Kegel mit der abgeflachten Spitze nach innen Richtung Rad erstreckt. Korrespondierend zur Bohrung 11 ist im unteren Abschnitt 9 des Kotflügels 1 und im äußeren Abschnitt 7 des Spritzlappens 2 eine korrespondierende Bohrung 12, 13 vorgesehen. Bei diesem Ausführungsbeispiel weisen die Bohrungen 11, 12 und 13 denselben Durchmesser auf. Beim Eindrehen der Schraube 4, deren Außendurchmesser größer ist als der Bohrungsdurchmesser, gräbt sich das Gewinde der Schraube 4 daher in den äußeren Abschnitt 7 des Spritzlappens, den unteren Abschnitt 9 des Kotflügels 1 und dann des Kunststoffelements 10. Auf diese Weise wird eine leicht herzustellende sichere Verbindung von Spritzlappen 2 und Kotflügel 1 gewährleistet.

Die Bohrungen 12 und 13 können jedoch auch größer ausfallen, beispielsweise den Durchmesser des Außengewindes der Schraube 4 aufweisen oder sogar geringfügig größer, sodass die Schraube 4 bei der Montage durch den äußeren Abschnitt 7 des Spritzlappens und den unteren Abschnitt 9 des Kotflügels hindurchgesteckt werden kann und dann mit dem Gewinde lediglich in das Kunststoffelement 10 eingedreht wird. Hierdurch ergibt sich eine nochmals vereinfachte Montage bei noch ausreichenden Befestigungskräften.

Wie gut aus Fig. 4 zu sehen ist, ergibt sich im unteren Bereich des Kotflügels 1 und im oberen Bereich des Spritzlappens 2 ein stabiler Verbund aus den zwei beabstandeten Abschnitten 7 und 8 des Spritzlappens 2 und dem unteren Abschnitt 9 des Kotflügels. Dieser Verbund weist eine hohe Steifigkeit auf, wodurch verhindert wird, dass der Spritzlappen durch den Fahrtwind um seine Befestigung am Kotflügel 1 herum unzulässig weit ausgelenkt wird.

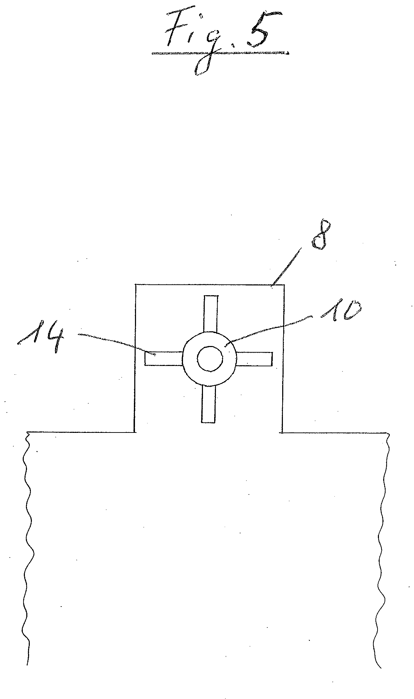

Fig. 5 beschreibt eine leicht abgewandelte Ausführungsform, bei der das Kunststoffelement 10 ebenfalls als abgestumpfter Kegel ausgebildet ist, jedoch mit vier radial nach außen verlaufenen Versteifungsrippen 14 versehen ist. Fig. 5 zeigt diese Gestaltung in der Draufsicht.

## Patentansprüche

1. Kotflügel mit Spritzlappen (2) zur Montage an Fahrzeugen, bevorzugt Lastkraftwagen, der in seinem unteren Bereich (9) mit einem Spritzlappen (2) versehen ist, der mittels eines Montagemittels (4) mit dem Kotflügel (1) verbunden wird,
**dadurch gekennzeichnet, dass**
der Spritzlappen (2) in seinem oberen Bereich (6) mindestens zwei beabstandete Abschnitte (7, 8) aufweist, die einen Schlitz ausbilden, der auf die Dicke des unteren Bereichs (9) des Kotflügels (1) abgestimmt ist, um auf diesen aufsteckbar zu sein,
wobei eine Verbindung von Kotflügel (1) und Spritzlappen (2) mittels Montagemittel (4) erfolgt, die den Spritzlappen (2) und den Kotflügel (1) durchdringen und von einer Montagemittelaufnahme (10) bevorzugt am Spritzlappen (2) aufgenommen werden.

2. Kotflügel mit Spritzlappen (2) zur Montage an Fahrzeugen, bevorzugt Lastkraftwagen, der in seinem unteren Bereich (9) mit einem Spritzlappen (2) versehen ist, der mittels eines Montagemittels (4) mit dem Kotflügel (1) verbunden wird,
**dadurch gekennzeichnet, dass**
der Kotflügel (1) in seinem unteren Bereich mindestens zwei beabstandete Abschnitte aufweist, die einen Schlitz ausbilden, der auf die Dicke des oberen Bereichs des Spritzlappens (2) abgestimmt ist, um diesen aufzunehmen,
wobei eine Verbindung von Kotflügel (1) und Spritzlappen (2) mittels Montagemittel (4) erfolgt, die den Spritzlappen (2) und den Kotflügel (1) durchdringen und von einer Montagemittelaufnahme (10) bevorzugt am Kotflügel (1) aufgenommen werden

3. Kotflügel nach Anspruch 1, **dadurch gekennzeichnet, dass** eine Montagemittelaufnahme (10) an den inneren Abschnitt (8), des Spritzlappens (2) ausgebildet ist, der auf den Kotflügel (1) aufsteckbar ist.

4. Kotflügel nach Anspruch 1 oder 2, **dadurch gekennzeichnet, dass** eine Montagemittelaufnahme (10) im unteren Bereich des Kotflügels (1), auf dem der Spritzlappen (2) aufsteckbar ist, ausgebildet ist.

5. Kotflügel nach einem der Ansprüche 1 bis 4, **dadurch gekennzeichnet, dass** das Montagemittel (4) eine Schraube ist, und die Montagemittelaufnahme (10) ein Kunststoffelement ist, in das die Schraube (4) eindrehbar ist.

6. Kotflügel nach Anspruch 5, **dadurch gekennzeichnet, dass** das Kunststoffelement (10) eine Bohrung (11) aufweist, die einen geringeren Durchmesser hat als der Außendurchmesser der Schraube (4).

7. Kotflügel nach Anspruch 5 oder 6, **dadurch gekennzeichnet, dass** das Kunststoffelement (10) eine Kegelform aufweist, wobei die Bohrung (11) von der Basis zur bevorzugt abgeflachten Spitze verläuft, ohne die Spitze zu durchdringen.

8. Kotflügel nach einem der Ansprüche 5 bis 7, **dadurch gekennzeichnet, dass** das Kunststoffelement (10) Verstärkungsrippen (14) aufweist, die von diesem radial nach außen weisen.

9. Kotflügel nach einem der Ansprüche 5 bis 8, **dadurch gekennzeichnet, dass** das Kunststoffelement (10) einstückig mit dem Spritzlappen (2) oder dem Kotflügel (1) ausgebildet ist.

10. Kotflügel nach einem der Ansprüche 1 bis 9, **dadurch gekennzeichnet, dass** die beabstandeten Abschnitte (7, 8) des Spritzlappens (2) oder des Kotflügels (1) als sich gegenüberliegende Laschen ausgebildet sind.

11. Kotflügel nach einem der Ansprüche 1 bis 9, **dadurch gekennzeichnet, dass** sich die beabstandeten Abschnitte (7, 8) des Spritzlappens (2) oder des Kotflügels (1) über die Breite des Kotflügels (1) erstrecken.

12. Kotflügel nach einem der Ansprüche 1 bis 9, **dadurch gekennzeichnet, dass** sich der äußere beabstandete Abschnitt (7) des Spritzlappens (2) oder des Kotflügels (1) über die Breite des Kotflügels (1) erstreckt, wohingegen auf der Innenseite des Spritzlappens (2) oder des Kotflügels (1) mehrere innere Abschnitte (8) laschenartig ausgebildet sind.

13. Kotflügel nach einem der Ansprüche 1 bis 12, **dadurch gekennzeichnet, dass** im unteren Bereich (9) des Kotflügels (1) an der Position der Montagemittelaufnahme (10) Bohrungen (12) zur Aufnahme von Montagemitteln (4) vorgesehen sind.

14. Kotflügel nach einem der Ansprüche 1 bis 13, **dadurch gekennzeichnet, dass** der Kotflügel (1) im unteren Bereich (9) mit einer Führung versehen ist, die eine Aufnahme des Spritzlappens (2) nur in einer bestimmten Position zulässt.

15. Kotflügel nach einem der Ansprüche 1 bis 14, **dadurch gekennzeichnet, dass** die Führung zumindest eine Seitenwand, einen Vorsprung oder einen Rücksprung aufweist, der mit zumindest einem der beabstandeten Abschnitte (7, 8) des Spritzlappens (2) oder des Kotflügels (1) zusammenwirkt.
